# EUROPEAN PATENT SPECIFICATION

(11) **EP 3 659 817 B1**
(45) Date of publication and mention of the grant of the patent: **28.09.2022**
(21) Application number: 17919181.2
(22) Date of filing: 18.12.2017
(51) Int. Cl.: B60B 19/14

(54) **OMNIDIRECTIONAL BALL WHEEL**
OMNIDIREKTIONALES KUGELRAD
ROUE À BILLES OMNIDIRECTIONNELLE

(30) Priority: 27.07.2017 CN 201710625715; 27.07.2017 CN 201720928752 U
(43) Date of publication of application: 03.06.2020
(73) Proprietor: Beijing Orion Star Technology Co., Ltd., Beijing 100026 (CN)
(72) Inventor: SU, Wenli, BEIJING 100026 (CN)
(74) Representative: Romano, Giuseppe
(86) International application number: PCT/CN2017/116990
(87) International publication number: WO 2019/019538

(56) References cited:
- WO-A1-2015/121521
- CN-A- 104 714 549
- CN-A- 105 966 171
- CN-A- 106 427 390
- CN-A- 107 310 329
- CN-U- 203 832 155
- CN-U- 203 902 137
- CN-U- 203 902 137
- CN-U- 205 736 640
- CN-U- 205 951 608
- CN-U- 207 028 700
- JP-A- 2000 335 726
- US-A1- 2016 318 337

## Description

### FIELD

The present invention relates to a technical field of mobile machinery, and more particularly to an omnidirectional ball wheel.

### BACKGROUND

Omnidirectional wheels are wheels that can move in any direction, having an active motion direction and a passive motion direction. When there are motions in both directions, the omnidirectional wheel can move in any direction depending on a speed in each direction, so as to realize omnidirectional motion. An omnidirectiona wheel belonging to the state of the art is disclosed in D1 CN 203 902 137 U.

Patent publication number CN201320814107.0 discloses an omnidirectional wheel mainly comprising a hub and a second wheel. Three or more hub teeth are uniformly distributed at an outer circumference of the hub, every two hub teeth are provided with one second wheel therebetween, and a radial direction of the second wheel is perpendicular to a tangential direction of the outer circumference of the hub. Due to the structure of the omnidirectional wheel, a plurality of relatively small second wheels constitute an outer ring, and gaps inevitably exist among the second wheels, which easily causes the omnidirectional wheel to be stuck by narrow obstacles and fail to cross obstacles; at the same time, due to a small rolling radius of the second wheel, the ability to cross obstacles is poor.

Patent publication number CN201620668906.5 discloses an omnidirectional ball wheel comprising a main shaft plate, a driven wheel, and two hemispherical driving wheels; the two hemispherical driving wheels are arranged on both sides of the main shaft plate respectively in such a manner as to be pivotable relative to the main shaft plate; and the driven wheel is arranged on the main shaft plate in such a manner as to be pivotable relative to the main shaft plate. Since a rolling radius of such an omnidirectional wheel in each direction is a radius of the sphere, it has a strong obstacle-crossing ability; however, due to a large gap between the two hemispherical driving wheels, the motion is not smooth enough and the impact is great, which is easy to reduce the effective driving load.

Patent publication number CN203902137U discloses an omni-directional wheel which comprises a hub, a first driven wheel set, a second driven wheel set and a hollow disk roller. The first driven wheel set and the second driven wheel set are alternately arranged along peripheral direction of the hub and can rotate around the self axis of the first driven wheel set and the self axis of the second driven wheel set respectively, the hollow disk roller is arranged on the hub and can rotate around the self axis of the hollow disk roller, the first driven wheel set is arranged in a hollow cavity of the hollow disk roller, and the first driven wheel set, and the second driven wheel set and the hollow disk roller are connected with one another along an arc at the peripheral outer edge of the hub and form a smooth arc.

### SUMMARY

The present invention aims to solve at least one of the technical problems in the related art to some extent. To this end, an objective of the present invention is to propose an omnidirectional ball wheel that can achieve omnidirectional rolling and smoother motion.

The omnidirectional ball wheel according to embodiments of the present invention includes:
a ball wheel skeleton having a curved outer surface, the ball wheel skeleton being pivotable and defining a first pivot axis; at least three first wheels, each first wheel having a curved outer surface, being pivotably connected to the ball wheel skeleton, and defining a second pivot axis, respective outer surfaces of the at least three first wheels being on the same spherical surface as the outer surface of the ball wheel skeleton, and the second pivot axis being perpendicular to and intersecting the first pivot axis; a top of the outer surface of each first wheel being provided with a through hole for receiving a second wheel, the second wheel being pivotably connected to the ball wheel skeleton and defining a third pivot axis, the outer surface of the first wheel and a portion of an outer surface of the second wheel being on the same spherical surface, and the third pivot axis being perpendicular to the first pivot axis and the second pivot axis simultaneously. Thus, the omnidirectional ball wheel according to the embodiments of the present invention can realize omnidirectional rolling and smoother motion.

In some embodiments, the ball wheel skeleton defines a cavity, the number of the cavities corresponds to the number of the first wheels; and each cavity is provided with a cylindrical mounting portion therein, an axis of the cylindrical mounting portion is perpendicular to and intersects the first pivot axis; and the first wheel and the second wheel are connected to the ball wheel skeleton through the cylindrical mounting portion. Thus, the mounting of the first wheel and the second wheel becomes convenient, and the weight reduction of the omnidirectional ball wheel is facilitated.

In some embodiments, the ball wheel skeleton includes a housing, a central post, and a partition plate, and the housing, the central post and the partition plate are integrally formed; the housing is a spherical housing having an opening; two ends of the central post are formed on the housing, and an axis of the central post defines the first pivot axis; the number of the partition plates corresponds to the number of the cavities, each partition plate extends from an outer surface of the central post to an inner surface of the housing to define the cavity, and the cylindrical mounting portion is formed by extending out of the opening of the housing from adjacent two partition plates. Thus, the structure of the ball wheel skeleton is simple and is not easily deformed, which is advantageous for the outer surface of the ball wheel skeleton to keep spherical.

In some embodiments, the omnidirectional ball wheel further includes a main drive shaft, and the central post of the ball wheel skeleton defines a shaft hole configured to mount the main drive shaft. Thus, it is convenient to connect the omnidirectional ball wheel to an electric motor and a decelerator, so as to drive the omnidirectional ball wheel.

In some embodiments, two ends of the housing of the ball wheel skeleton along the first pivot axis are configured as flat faces. Thus, the thickness of the two ends of the housing along the pivot axis can be decreased. Therefore, the influence on the mold is reduced, and the injection molding of the ball wheel skeleton is facilitated.

In some embodiments, the first wheel includes a rubber layer and a first skeleton, and the first skeleton is configured to support the rubber layer.

In some embodiments, the first skeleton has compressive strength higher than compressive strength of the rubber layer.

In some embodiments, the first skeleton is step-shaped.

Thus, by providing the rubber layer and the first skeleton, it is advantageous for the outer surface of the rubber layer to keep spherical.

In some embodiments, the first wheel further includes a first bearing and a bearing pressing plate, the first skeleton defines a first groove, the bearing pressing plate defines a second groove adapted to cooperate with the first groove, the first groove and the second groove collectively define an accommodation space for accommodating the first bearing, and the first bearing has an outer ring adapted to be pressed in the accommodation space, and an inner ring adapted to be fitted over the cylindrical mounting portion. Thus, it is convenient to pivotably connect the first wheel to the ball wheel skeleton.

In some embodiments, an outer peripheral wall of the cylindrical mounting portion is formed with a plurality of ribs extending axially. Thus, it is convenient to limit the position of the first wheel on the ball wheel skeleton, which is advantageous for the outer surface of the omnidirectional ball wheel to keep spherical.

In some embodiments, the second wheel includes a rubber wheel and a gland, the rubber wheel is spindle-shaped and pivotably connected to the gland, and the gland is fixedly and directionally connected to the cylindrical mounting portion. Thus, it is convenient to pivotably connect the second wheel to the ball wheel skeleton.

In some embodiments, the second wheel further includes two second bearings and an axle, two ends of the rubber wheel define a first recess separately, the first recess is adapted to be in interference fit with an outer ring of the second bearing, and an inner ring of the second bearing is adapted to be in interference fit with the axle; the gland has a ring portion, and an inner side of the ring portion is provided with two opposite second recesses adapted to be in interference fit with the axle. Thus, it is convenient to pivotably connect the rubber wheel to the gland.

In some embodiments, the gland further includes a cover portion, and the cover portion is provided with a plurality of counter bores configured to mounting a screw; the ring portion is provided with a positioning pin extending axially towards the ball wheel skeleton.

In some embodiments, the cylindrical mounting portion is provided with a screw post for use with the counter bore on the cover portion and a positioning post for use with the positioning pin on the ring portion.

Thus, it is convenient to fixedly and directionally fix the gland to the cylindrical mounting portion.

In some embodiments, the ring portion has a size adapted to be accommodated in a through hole of the first wheel, and the cover portion is provided with a slot adapted to accommodate the rubber wheel. Thus, the gland can close a gap defined when the rubber wheel is received in the through hole of the first wheel.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and/or other aspects and advantages of embodiments of the present invention will become apparent and more readily appreciated from the following descriptions made with reference the accompanying drawings, in which:
Fig. 1 illustrates a perspective view of an omnidirectional ball wheel according to an embodiment of the present invention.
Fig. 2 illustrates an exploded view of an omnidirectional ball wheel according to an embodiment of the present invention.
Fig. 3 illustrates a side view of an omnidirectional ball wheel according to an embodiment of the present invention.
Fig. 4 illustrates a sectional view taken along line C-C in Fig. 3.

Reference numerals:
100 omnidirectional ball wheel;
110 ball wheel skeleton;
111 housing; 112 central post; 1121 shaft hole; 113 partition plate; 114 cylindrical mounting portion; 1141 rib; 1142 screw post; 1143 positioning post; 115 cavity;
120 first wheel;
121 rubber layer; 122 first skeleton; 1221 first groove; 123 first bearing; 124 bearing pressing plate; 1241 second groove;
130 second wheel;
131 rubber wheel; 1311 first recess; 132 gland; 1321 ring portion; 1322 cover portion; 1323 second recess; 1324 counter bore; 1325 positioning pin; 133 second bearing; 134 axle;
140 main drive shaft.

### DETAILED DESCRIPTION

Embodiments of the present invention will be described in detail and examples of the embodiments will be illustrated in the accompanying drawings, where same or similar reference numerals are used to indicate same or similar members or members with same or similar functions. The embodiments described herein with reference to the drawings are explanatory, which only aim to illustrate the present disclosure, but shall not be construed to limit the present invention

In the description of the present disclosure, the feature defined with "first" and "second" may comprise one or more of this feature. In the description of the present invention, the term "a plurality of' means two or more than two, unless specified otherwise.

In the description of the present invention, it should be noted that, unless specified or limited otherwise, the terms "connected," "coupled," and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

An embodiment of the present invention discloses an omnidirectional ball wheel, including:
a ball wheel skeleton having a curved outer surface, the ball wheel skeleton being pivotable and defining a first pivot axis; at least three first wheels, each first wheel having a curved outer surface, being pivotably connected to the ball wheel skeleton, and defining a second pivot axis, respective outer surfaces of the at least three first wheels being on the same spherical surface as the outer surface of the ball wheel skeleton, and the second pivot axis being perpendicular to and intersecting the first pivot axis; a top of the outer surface of each first wheel being provided with a through hole for receiving a second wheel, the second wheel being pivotably connected to the ball wheel skeleton and defining a third pivot axis, the outer surface of the first wheel and a portion of an outer surface of the second wheel being on a common spherical surface, and the third pivot axis being perpendicular to the first pivot axis and the second pivot axis simultaneously.

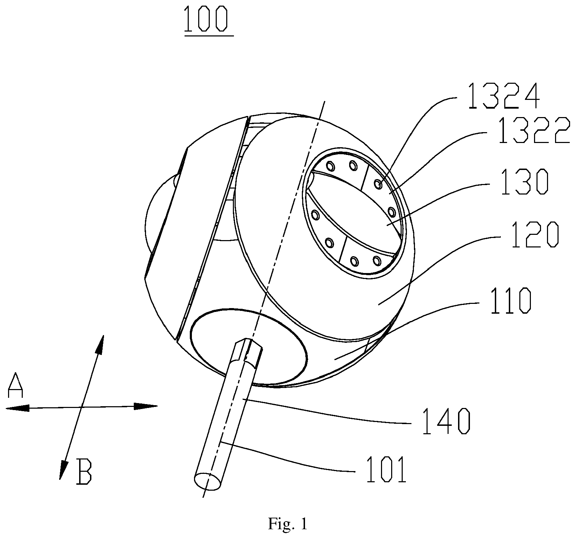

An omnidirectional ball wheel 100 according to embodiments of the present invention will be described below with reference to Figs. 1 to 4.

Fig. 1 is a perspective view of an omnidirectional ball wheel according to an embodiment of the present invention. As illustrated in Fig. 1, the omnidirectional ball wheel 100 according to the embodiment of the present invention includes a ball wheel skeleton 110, a first wheel 120, and a second wheel 130. The ball wheel skeleton 110 has a curved outer surface, and the ball wheel skeleton 110 is pivotable and has a first pivot axis 101. The first wheel 120 also has a curved outer surface, and the first wheel 120 is pivotably connected to the ball wheel skeleton 110 and has a second pivot axis 102. The outer surface of the first wheel 120 and the outer surface of the ball wheel skeleton 110 are substantially on the same spherical surface, and the second pivot axis 102 is perpendicular to and intersects the first pivot axis 101. A top of the outer surface of the first wheel 120 is provided with a through hole to accommodate the second wheel 130. The second wheel 130 is pivotably connected to the ball wheel skeleton 110 and has a third pivot axis 103. A portion of an outer surface of the second wheel 130 and the outer surface of the first wheel 120 are substantially on the same spherical surface, and the third pivot axis 103 is simultaneously perpendicular to the second pivot axis 102 and the first pivot axis 101. In addition, the omnidirectional ball wheel 100 further includes a main drive shaft 140 configured to connect an electric motor and a decelerator.

It should be noted that "the top of the outer surface" of the first wheel 120 refers to a portion where the outer surface of the first wheel 120 intersects the second pivot axis 102.

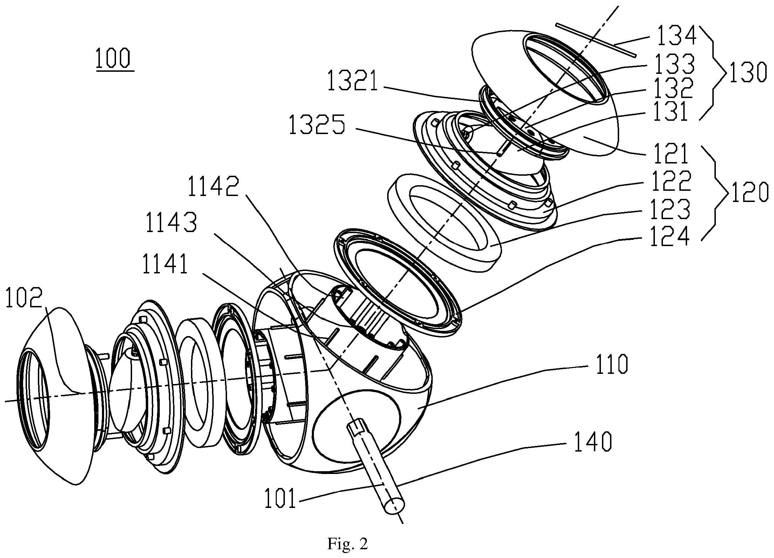

Fig. 2 illustrates an exploded view of the omnidirectional ball wheel according to an embodiment of the present invention.

As illustrated in Fig. 2, the first wheel 120 includes a rubber layer 121, a first skeleton 122, a first bearing 123, and a bearing pressing plate 124. The rubber layer 121 has a curved outer surface configured to contact the ground, and the first wheel 120 has a through hole defined in the rubber layer 121. The first skeleton 122 is used to support the rubber layer 121, such that an outer surface of the rubber layer 121 is spherical to ensure that rolling radii of the omnidirectional ball wheel 100 in various directions are the same. The bearing pressing plate 124 has an annular plate shape and is adapted to be fixedly connected to the first skeleton 122. The first bearing 123 is received between the first skeleton 122 and the bearing pressing plate 124, such that the first wheel 120 can pivot. The compressive strength of the first skeleton 122 is higher than the compressive strength of the rubber layer 121, so that the first skeleton 122 can support the rubber layer 121. For example, the raw material of the first skeleton 122 may be POM plastic, ABS plastic, PA plastic, etc., all of which have light weight and high strength. The first skeleton 122 is step-shaped to uniformly support the rubber layer 121, which helps the outer surface of the rubber layer 121 to keep spherical.

Further, as illustrated in Fig. 2, the second wheel 130 includes a rubber wheel 131, two second bearings 133, an axle 134, and a gland 132. The rubber wheel 131 exhibits a spindle shape configured to contact the ground. The rubber wheel 131 is pivotably fitted over the axle 134 by two second bearings 133, and the axle 134 is fixedly connected to the gland 132.

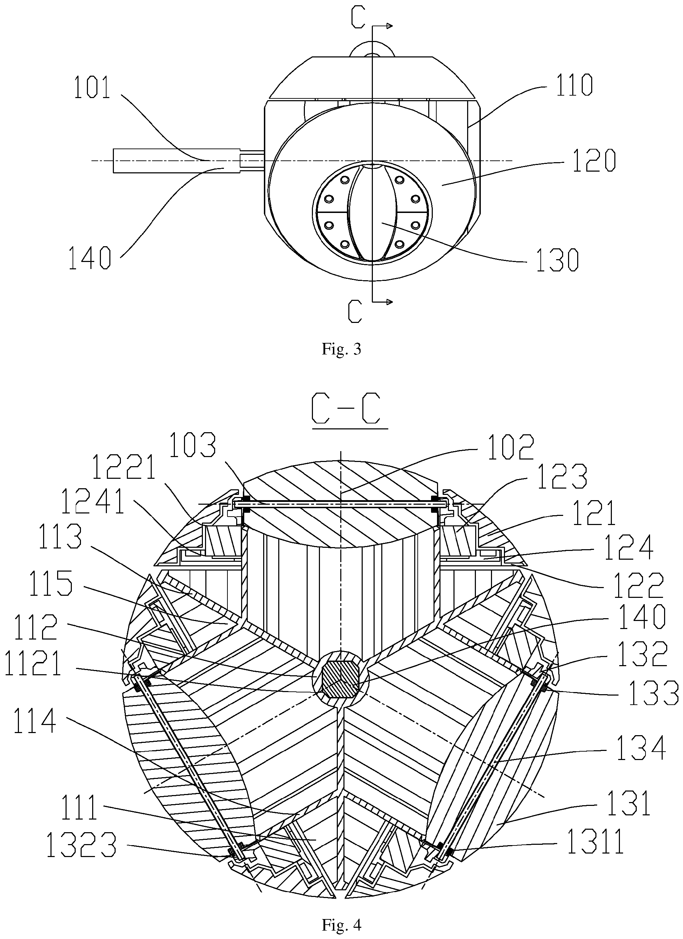

Fig. 3 illustrates a side view of the omnidirectional ball wheel according to an embodiment of the present invention.

Fig. 4 illustrates a sectional view taken along line C-C of Fig. 3. As illustrated in Fig. 4, the ball wheel skeleton 110 includes a housing 111, a central post 112, and three partition plates 113. The housing 111, the central post 112, and the three partition plates 113 are integrally formed. The housing 111 is a spherical housing having an opening. Both ends of the central post 112 are formed on the housing 111, and an axis of the central post 112 defines the first pivot axis 101. Each of the partition plates 113 extends radially from an outer surface of the central post to an inner surface of the housing 111, such that three identical cavities 115 are defined in the ball wheel skeleton 110, that is, the angle between adjacent partition plates 113 is equal. The cavities 115 of the ball wheel skeleton 110 are in communication with the outside through the opening of the housing 111. The ball wheel skeleton 110 further includes three cylindrical mounting portions 114, each of which is disposed in the cavity 115 of the ball wheel skeleton 110 correspondingly, and the cylindrical mounting portion 114 is formed by extending out of the opening of the housing 111 from the adjacent two partition plates 113. Moreover, an axis of the cylindrical mounting portion 114 is perpendicular to and intersects the axis of the central post 112, that is, the axis of the cylindrical mounting portion 114 defines the second pivot axis 102. The first wheel 120 and the second wheel 130 are connected to the ball wheel skeleton 110 by the cylindrical mounting portion 114. Furthermore, the central post 112 of the ball wheel skeleton 110 defines a shaft hole 1121 for mounting the main drive shaft 140, and the main drive shaft 140 is interference fit in the shaft hole 1121 of the central post. Therefore, the electric motor and the decelerator can drive the omnidirectional ball wheel 100 to rotate by means of the main drive shaft 140.

Further, as illustrated in Fig. 4, the first skeleton 122 defines a first groove 1221, and the bearing pressing plate 124 defines a second groove 1241 adapted to cooperate with the first groove 1221, such that the first groove 1221 and the second groove 1241 collectively define an accommodation space for accommodating the first bearing 123. The first bearing 123 is received in the accommodation space, and the bearing pressing plate 124 can be fixedly connected to the first skeleton 122 by a screw, such that an outer ring of the first bearing 123 is pressed in the accommodation space, and an inner ring of the first bearing 123 can be fitted over the cylindrical mounting portion 114 of the ball wheel skeleton 110. Thus, the first wheel 120 can be connected to the ball wheel skeleton 110, and the first wheel 120 can rotate about the axis of the cylindrical mounting portion 114 of the ball wheel skeleton 110. For example, the first bearing 123 can be a deep groove ball bearing or a self-aligning roller bearing, such that the first wheel 120 can withstand a certain axial load and satisfy the requirements of the use of the omnidirectional ball wheel 100.

As illustrated in Fig. 1 and Fig. 4, the first wheel 120 is fitted over the cylindrical mounting portion 114, and an outer peripheral surface of the cylindrical mounting portion 114 is provided with a plurality of ribs 1141 extending axially to limit a mounting position of the first wheel 120, which helps the outer surface of the omnidirectional ball wheel 100 to keep spherical.

Further, as illustrated in Fig. 4, two ends of the rubber wheel 131 of the second wheel 130 define a first recess 1311 separately, and outer rings of the two second bearings 133 are in interference fit with the first recesses 1311 at the two ends of the rubber wheel 131, respectively, while inner rings of the two second bearings 133 are in interference fit with the axle 134. The gland 132 exhibits a circular plate shape, and has a ring portion 1321. An inner side of the ring portion 1321 is provided with two opposite second recesses 1323 for interference fit with the axle 134. Thus, the rubber wheel 131 is pivotably fitted over the axle 134 by the two second bearings, and the axle 134 is in interference fit with the second recess 1323 on the gland 132, i.e., the axle 134 is fixedly connected to the gland 132.

In combination with Figs. 1, 2, and 4, the gland 132 is adapted to be fixedly and directionally connected to the ball wheel skeleton 110. Specifically, the gland 132 further has a cover portion 1322, the cover portion 1322 is provided with a plurality of counter bores 1324 therein configured to mount a screw, and the ring portion 1321 is provided with a positioning pin 1325 extending axially towards the ball wheel skeleton 110. Correspondingly, the cylindrical mounting portion 114 of the ball wheel skeleton 110 is provided with a screw post 1142 for use with the counter bore 1324 in the cover portion 1322 and a positioning post 1143 for use with the positioning pin 1325 on the ring portion 1321. Thus, the gland 132 can be oriented and fixed relative to the cylindrical mounting portion 114 of the ball wheel skeleton 110, and a pivot axis of the rubber wheel 131, i.e., the third pivot axis 103, is simultaneously perpendicular to the first pivot axis 101 and the second pivot axis 102. Moreover, the gland 132 can further press the first bearing 123 against the ball wheel skeleton 110, thereby preventing the first bearing 123 or the entire first wheel 120 from coming off. Furthermore, the ring portion 1321 has a size adapted to be accommodated in the through hole of the rubber layer 121, and the cover portion 1322 is provided with a slot adapted to accommodate the rubber wheel 131, so that the gland 132 can close a gap defined when the rubber wheel 131 is received in the through hole of the rubber layer 121.

In addition, as illustrated in Fig. 1, Fig. 2 and Fig. 3, two ends of the housing 111 of the ball wheel skeleton 110 along the first pivot axis 101 are configured as flat faces, so that the thickness of the two ends of the housing 111 along the pivot axis can be decreased. Therefore, the influence on the mold is reduced, and the injection molding of the ball wheel skeleton 110 is facilitated.

In at least one embodiment, as illustrated in Fig. 1 and Fig. 4, the omnidirectional ball wheel 100 according to the embodiment of the present invention includes: a ball wheel skeleton 110 having a curved outer surface, the ball wheel skeleton 110 being pivotable and defining a first pivot axis 101; three first wheels 120, each first wheel 120 having a curved outer surface, being pivotably connected to the ball wheel skeleton 110, and defining a second pivot axis 102, the outer surfaces of the three first wheels 120 being all on the same spherical surface as the outer surface of the ball wheel skeleton 110, and the second pivot axis 102 being perpendicular to and intersecting the first pivot axis 101; a top of the outer surface of each first wheel 120 being provided with a through hole to accommodate a second wheel 130, and the second wheel 130 being pivotably connected to the ball wheel skeleton 110 and having a third pivot axis 103, the outer surface of the first wheel 120 and a portion of the outer surface of the second wheel 130 being on the same spherical surface, and the third pivot axis 103 being simultaneously perpendicular to the second axis and the first axis. Thus, the omnidirectional ball wheel 100 according to the embodiment of the present invention can achieve omnidirectional rolling and smoother motion.

In at least one embodiment, as illustrated in Fig. 4, the ball wheel skeleton 110 is provided with three cavities 115, and each cavity 115 is provided with a cylindrical mounting portion 114. An axis of the cylindrical mounting portion 114 is perpendicular to and intersects the first pivot axis 101. The first wheel 120 and the second wheel 130 are connected to the ball wheel skeleton 110 by means of the cylindrical mounting portion 114. Thus, the mounting of the first wheel 120 and the second wheel 130 becomes convenient, and the weight reduction of the omnidirectional ball wheel 100 is facilitated.

In at least one embodiment, as illustrated in Fig. 4, the ball wheel skeleton 110 includes a housing 111, a central post 112, and three partition plates 113, and the housing 111, the central post 112 and the three partition plates 113 are integrally formed; the housing 111 is a spherical housing having an opening; both ends of the central post 112 are formed on the housing 111, and an axis of the central post 112 defines the first pivot axis 101; each partition plate 113 extends from an outer surface of the central post 112 to an inner surface of the housing 111 to define the cavity 115; and the cylindrical mounting portion 114 is formed by extending out of the opening of the housing 111 from adjacent two partition plates 113. Thus, the structure of the ball wheel skeleton 110 is simple and not easily deformed, which is advantageous for the outer surface of the ball wheel skeleton 110 to keep spherical.

In at least one embodiment, as illustrated in Fig. 4, the first wheel 120 includes a first bearing 123 and a bearing pressing plate 124; the first skeleton 122 defines a first groove 1221, and the bearing pressing plate 124 defines a second groove 1241 adapted to cooperate with the first groove 1221; the first groove 1221 and the second groove 1241 cooperatively define an accommodation space for accommodating the first bearing 123; an outer ring of the first bearing 123 is adapted to be pressed in the accommodation space, and an inner ring of the first bearing 123 is adapted to be fitted over the cylindrical mounting portion 114. Thus, it is convenient to pivotably connect the first wheel 120 to the ball wheel skeleton 110.

In at least one embodiment, as illustrated in Fig. 4, the second wheel 130 includes a rubber wheel 131 and a gland 132. The rubber wheel 131 is spindle-shaped and is pivotably connected to the gland 132; and the gland 132 is fixedly and directionally connected to the cylindrical mounting portion 114. Thus, it is convenient to pivotably mount the second wheel 130 to the ball wheel skeleton 110.

In at least one embodiment, as illustrated in Fig. 4, the second wheel 130 further includes two second bearings 133 and an axle 134. Two ends of the rubber wheel 131 respectively define a first recess 1311 adapted to be in interference fit with an outer ring of the second bearing 133, and an inner ring of the second bearing 133 is adapted to be in interference fit with the axle 134. The gland 132 has a ring portion 1321, and an inner side of the ring portion 1321 is provided with two opposite second recesses 1323 adapted to be in interference fit with the axle 134. Thus, it is convenient to pivotably connect the rubber wheel 131 to the gland 132.

In at least one embodiment, as illustrated in Figs. 1 and 2, the gland 132 further has a cover portion 1322. The cover portion 1322 is provided with a plurality of counter bores 1324 configured to mount a screw, and the ring portion 1321 is provided with a positioning pin 1325 extending axially towards the ball wheel skeleton 110.

In at least one embodiment, as illustrated in Figs. 1 and 2, the cylindrical mounting portion 114 is provided with a screw post 1142 for use with the counter bore 1324 in the cover portion 1322 and a positioning post 1143 for use with the positioning pin 1325 on the ring portion 1321. Thus, it is convenient to fixedly and directionally connect the gland 132 to the cylindrical mounting portion 114.

The working process of the omnidirectional ball wheel 100 according to embodiments of the present invention will be briefly described below with reference to the accompanying drawings.

As illustrated in Fig. 1, the ball wheel skeleton 110 is rotatable under the drive of the electric motor and the decelerator, thereby bringing the entire omnidirectional ball wheel 100 to move in an A direction, which is the active motion of the omnidirectional ball wheel 100. When the omnidirectional ball wheel 100 moves in a B direction, the first wheel 120 rotates relative to the ball wheel skeleton 110, and the omnidirectional ball wheel 100 rolls on the ground, which is the passive motion of the omnidirectional ball wheel 100. When the omnidirectional ball wheel 100 moves in the A direction and the B direction simultaneously, the omnidirectional ball wheel 100 can achieve omnidirectional rolling according to the principle of motion synthesis. However, when the top of the outer surface of the first wheel 120 contacts the ground and the omnidirectional ball wheel 100 moves in the B direction, the entire omnidirectional ball wheel 100 will slide on the ground as the first wheel 120 does not rotate at this time. Hence, the second wheel 130 is provided at the top of the outer surface of the first wheel 120, such that when the top of the outer surface of the first wheel 120 contacts the ground and the omnidirectional ball wheel 100 moves in the B direction, the second wheel 130 can rotate. In such a way, the omnidirectional ball wheel 100 can roll in any direction no matter which part of the spherical surface of the omnidirectional ball 100 contacts the ground, thereby achieving omnidirectional rolling of the omnidirectional ball wheel 100.

Regardless of the direction in which the omnidirectional ball wheel 100 according to the embodiments of the present invention rolls, its cross section in the rolling direction is a circle having the same radius, and the obstacle-crossing ability in each direction is the same, so the omnidirectional ball wheel 100 according to the embodiments of the present invention has a strong obstacle-crossing ability and can perform omnidirectional motion on a ground having a suitable degree of unevenness. Moreover, since the outer surface of the omnidirectional ball wheel 100 according to the embodiments of the present invention is a spherical surface, the gap between each first wheel 120 and the ball wheel skeleton 110 is small, and the gap between the first wheel 120 and the second wheel 130 is also small. Thus, compared with omnidirectional ball wheels in the related art, the omnidirectional ball wheel 100 according to the embodiments of the present invention has a smaller gap and smoother motion, and is subjected to less impact, such that the effective driving load will not be reduced.

It should be noted that the omnidirectional ball wheel 100 according to the embodiments of the present invention has three cavities 115, three first wheels 120, and three second wheels 130, that is, the omnidirectional ball wheel 100 is divided into three parts and hence can be called a three-lobed omnidirectional ball wheel. Although the present invention only illustrates a situation where the lobes of the three-lobed omnidirectional ball are the same, it could be understood by those skilled in the art that the lobes of the three-lobed omnidirectional ball can also be different. The three-lobed omnidirectional ball wheel with the same lobes improves the versatility and modularization, and the first wheels 120 and the second wheels 130 are distributed more uniformly and are easy to control. Although the present disclosure only illustrates a three-lobed omnidirectional ball wheel, those skilled in the art will appreciate that the technical solutions of the present disclosure are also applicable to a four-lobed omnidirectional ball wheel, a five-lobed omnidirectional ball wheel, and the like.

Reference throughout this specification to "an embodiment," "some embodiments," "an example," "a specific example," or "some examples," means that a particular feature, structure, material, or characteristic described in connection with the embodiment or example is included in at least one embodiment or example of the present invention

Thus, the appearances of the above phrases throughout this specification are not necessarily referring to the same embodiment or example of the present invention.

Although embodiments of the present disclosure have been shown and described, it would be appreciated by those skilled in the art that the above embodiments are explanatory and are not intended to limit the present disclosure, and any changes, modifications, alternatives and variations can be made in the embodiments without departing from the scope of the present invention defined in the claims.

## Claims

1. An omnidirectional ball wheel (100), comprising:
a ball wheel skeleton (110) having a curved outer surface, the ball wheel skeleton (110) being pivotable and defining a first pivot axis (101);
a first wheel (120), the first wheel (120) having a curved outer surface, being pivotably connected to the ball wheel skeleton (110), and defining a second pivot axis (102), an outer surface of the first wheel (120) being on a same spherical surface as the outer surface of the ball wheel skeleton (110), and
a top of the outer surface of the first wheel (120) being provided with a through hole for receiving a second wheel (130), the second wheel (130) being pivotably connected to the ball wheel skeleton (110) and defining a third pivot axis (103), the outer surface of the first wheel (120) and a portion of an outer surface of the second wheel (130) being on the same spherical surface,
**characterized in that**:
there are at least three first wheels (120), the second pivot axis (102) is perpendicular to and intersects the first pivot axis (101); and the third pivot axis (103) is perpendicular to the first pivot axis (101) and the second pivot axis (102) simultaneously.

2. The omnidirectional ball wheel (100) according to claim 1, wherein the ball wheel skeleton (110) is provided with a cavity (115), the number of the cavities (115) corresponds to the number of the first wheels (120); and each cavity (115) is provided with a cylindrical mounting portion (114) therein, an axis of the cylindrical mounting portion (114) is perpendicular to and intersects the first pivot axis (101); and the first wheel (120) and the second wheel (130) are connected to the ball wheel skeleton (110) through the cylindrical mounting portion (114).

3. The omnidirectional ball wheel (100) according to claim 2, wherein the ball wheel skeleton (110) comprises a housing (111), a central post (112), and a partition plate (113), and the housing (111), the central post (112) and the partition plate (113) are integrally formed; the housing (111) is a spherical housing having an opening; two ends of the central post (112) are formed on the housing (111), and an axis of the central post (112) defines the first pivot axis (101); the number of the partition plates (113) corresponds to the number of the cavities (115), each partition plate (113) extends from an outer surface of the central post (112) to an inner surface of the housing (111) to define the cavity (115), and the cylindrical mounting portion (114) is formed by extending out of the opening of the housing (111) from adjacent two partition plates (113).

4. The omnidirectional ball wheel (100) according to claim 3, wherein the omnidirectional ball wheel (100) further comprises a main drive shaft (140), and the central post (112) of the ball wheel skeleton (110) defines a shaft hole (1121) for mounting the main drive shaft (140).

5. The omnidirectional ball wheel (100) according to claim 3 or 4, wherein two ends of the housing (111) of the ball wheel skeleton (110) along the first pivot axis (101) are configured as flat faces.

6. The omnidirectional ball wheel (100) according to any one of claims 2 to 5, wherein the first wheel (120) comprises a rubber layer (121) and a first skeleton (122), the rubber layer (121) has a curved outer surface, and the first skeleton (122) is configured to support the rubber layer (121).

7. The omnidirectional ball wheel (100) according to claim 6, wherein the first skeleton (122) has compressive strength higher than compressive strength of the rubber layer (121).

8. The omnidirectional ball wheel (100) according to claim 7, wherein the first skeleton (122) is step-shaped.

9. The omnidirectional ball wheel (100) according to any one of claims 6 to 8, wherein the first wheel (120) further comprises a first bearing (123) and a bearing pressing plate (124), the first skeleton (122) defines a first groove (1221), the bearing pressing plate (124) defines a second groove (1241) adapted to cooperate with the first groove (1221), the first groove (1221) and the second groove (1241) collectively define an accommodation space for accommodating the first bearing (123), and the first bearing (123) has an outer ring adapted to be pressed in the accommodation space, and an inner ring adapted to be fitted over the cylindrical mounting portion (114).

10. The omnidirectional ball wheel (100) according to any one of claims 2 to 9, wherein an outer peripheral wall of the cylindrical mounting portion (114) is provided with a plurality of ribs (1141) extending axially.

11. The omnidirectional ball wheel (100) according to any one of claims 2 to 10, wherein the second wheel (130) comprises a rubber wheel (131) and a gland (132), the rubber wheel (131) is spindle-shaped and pivotably connected to the gland (132), and the gland (132) is fixedly and directionally connected to the cylindrical mounting portion (114).

12. The omnidirectional ball wheel (100) according to claim 11, wherein the second wheel (130) further comprises two second bearings (133) and an axle (134), two ends of the rubber wheel (131) define a first recess (1311) separately, the first recess (1311) is adapted to be in interference fit with an outer ring of the second bearing (133), and an inner ring of the second bearing (133) is adapted to be in interference fit with the axle (134); the gland (132) has a ring portion (1321), and an inner side of the ring portion (1321) is provided with two opposite second recesses (1323) adapted to be in interference fit with the axle (134).

13. The omnidirectional ball wheel (100) according to claim 12, wherein the gland (132) further comprises a cover portion (1322), and the cover portion (1322) is provided with a plurality of counter bores (1324) configured to mount a screw; the ring portion (1321) is provided with a positioning pin (1325) extending axially towards the ball wheel skeleton (110).

14. The omnidirectional ball wheel (100) according to claim 13, wherein the cylindrical mounting portion (114) is provided with a screw post (1142) for use with the counter bore (1324) in the cover portion (1322) and a positioning post (1143) for use with the positioning pin (1325) on the ring portion (1321).

15. The omnidirectional ball wheel (100) according to claim 13, wherein the ring portion (1321) has a size adapted to be accommodated in the through hole of the first wheel (120), and the cover portion (1322) is provided with a slot adapted to accommodate the rubber wheel (131).

## Patentansprüche

1. Ein omnidirektionales Kugelrad (100), umfassend:
ein Kugelradskelett (110) mit einer gekrümmten Außenfläche, wobei das Kugelradskelett (110) schwenkbar ist und eine erste Drehachse (101) definiert;
ein erstes Rad (120), wobei das erste Rad (120) eine gekrümmte Außenfläche hat, schwenkbar mit dem Kugelradskelett (110) verbunden ist und eine zweite Drehachse (102) definiert, wobei eine Außenfläche des ersten Rades (120) auf einer gleichen sphärischen Oberfläche wie die Außenfläche des Kugelradskeletts (110) liegt, und
eine Oberseite der Außenfläche des ersten Rades (120) mit einem Durchgangsloch zur Aufnahme eines zweiten Rades (130) versehen ist, wobei das zweite Rad (130) schwenkbar mit dem Kugelradskelett (110) verbunden ist und eine dritte Drehachse (103) definiert, wobei die Außenfläche des ersten Rades (120) und ein Teil einer Außenfläche des zweiten Rades (130) auf der gleichen Kugeloberfläche liegen,
**dadurch gekennzeichnet, dass**:
es mindestens drei erste Räder (120) gibt, die zweite Schwenkachse (102) senkrecht zur ersten Drehachse (101) steht und diese schneidet; und die dritte Drehachse (103) gleichzeitig senkrecht zur ersten Drehachse (101) und zur zweiten Drehachse (102) steht.

2. Omnidirektionales Kugelrad (100) nach Anspruch 1, wobei das Kugelradskelett (110) mit einer Vertiefung (115) versehen ist, die Anzahl der Vertiefungen (115) der Anzahl der ersten Räder (120) entspricht; und jede Vertiefung (115) mit einem zylindrischen Montageabschnitt (114) darin versehen ist, wobei eine Achse des zylindrischen Montageabschnitts (114) senkrecht zur ersten Drehachse (101) ist und diese schneidet; und das erste Rad (120) und das zweite Rad (130) mit dem Kugelradskelett (110) durch den zylindrischen Montageabschnitt (114) verbunden sind.

3. Omnidirektionales Kugelrad (100) nach Anspruch 2, wobei das Kugelradskelett (110) ein Gehäuse (111), einen zentralen Pfosten (112) und eine Trennplatte (113) umfasst und das Gehäuse (111), der zentrale Pfosten (112) und die Trennplatte (113) einstückig ausgebildet sind; das Gehäuse (111) ein kugelförmiges Gehäuse mit einer Öffnung ist; zwei Enden des zentralen Pfostens (112) am Gehäuse (111) ausgebildet sind und eine Achse des zentralen Pfostens (112) die erste Drehachse (101) definiert; die Anzahl der Trennplatten (113) der Anzahl der Vertiefungen (115) entspricht, jede Trennplatte (113) sich von einer Außenfläche des zentralen Pfostens (112) zu einer Innenfläche des Gehäuses (111) erstreckt, um die Vertiefung (115) zu definieren, und der zylindrische Befestigungsabschnitt (114) durch Erstrecken aus der Öffnung des Gehäuses (111) von zwei benachbarten Trennplatten (113) gebildet wird.

4. Omnidirektionales Kugelrad (100) nach Anspruch 3, wobei das omnidirektionale Kugelrad (100) weiterhin eine Hauptantriebswelle (140) umfasst und der zentrale Pfosten (112) des Kugelradskeletts (110) ein Wellenloch (1121) zur Montage der Hauptantriebswelle (140) definiert.

5. Omnidirektionales Kugelrad (100) nach Anspruch 3 oder 4, wobei zwei Enden des Gehäuses (111) des Kugelradskeletts (110) entlang der ersten Schwenkachse (101) als ebene Flächen ausgebildet sind.

6. Omnidirektionales Kugelrad (100) nach einem der Ansprüche 2 bis 5, wobei das erste Rad (120) eine Gummischicht (121) und ein erstes Skelett (122) umfasst, wobei die Gummischicht (121) eine gekrümmte Außenfläche aufweist und das erste Skelett (122) so ausgebildet ist, dass es die Gummischicht (121) trägt.

7. Omnidirektionales Kugelrad (100) nach Anspruch 6, wobei das erste Skelett (122) eine höhere Druckfestigkeit als die Druckfestigkeit der Gummischicht (121) aufweist.

8. Omnidirektionales Kugelrad (100) nach Anspruch 7, wobei das erste Skelett (122) stufenförmig ist.

9. Omnidirektionales Kugelrad (100) nach einem der Ansprüche 6 bis 8, wobei das erste Rad (120) ferner ein erstes Lager (123) und eine Lageranpressplatte (124) umfasst, das erste Skelett (122) eine erste Rille (1221) definiert, die Lageranpressplatte (124) eine zweite Rille (1241) definiert, die dazu eingerichtet ist, mit der ersten Rille (1221) zusammenzuwirken, wobei die erste Nut (1221) und die zweite Nut (1241) zusammen einen Aufnahmeraum zur Aufnahme des ersten Lagers (123) definieren und das erste Lager (123) einen Außenring aufweist, der dazu eingerichtet ist, um in den Aufnahmeraum gepresst zu werden, und einen Innenring, der dazu eingerichtet ist, um über dem zylindrischen Montageabschnitt (114) eingepasst zu werden.

10. Omnidirektionales Kugelrad (100) nach einem der Ansprüche 2 bis 9, wobei eine äußere Umfangswand des zylindrischen Befestigungsabschnitts (114) mit einer Vielzahl von Rippen (1141) versehen ist, die sich axial erstrecken.

11. Omnidirektionales Kugelrad (100) nach einem der Ansprüche 2 bis 10, wobei das zweite Rad (130) ein Gummirad (131) und eine Stopfbuchse (132) umfasst, das Gummirad (131) spindelförmig ist und drehbar mit der Stopfbuchse (132) verbunden ist, und die Stopfbuchse (132) fest und richtungsabhängig mit dem zylindrischen Montageabschnitt (114) verbunden ist.

12. Omnidirektionales Kugelrad (100) nach Anspruch 11, wobei das zweite Rad (130) ferner zwei zweite Lager (133) und eine Achse (134) umfasst, zwei Enden des Gummirads (131) getrennt eine erste Aussparung (1311) definieren, die erste Aussparung (1311) dazu eingerichtet ist, in Presspassung mit einem Außenring des zweiten Lagers (133) zu sein, und ein Innenring des zweiten Lagers (133) dazu eingerichtet ist, in Presspassung mit der Achse (134) zu sein; die Stopfbuchse (132) einen Ringabschnitt (1321) aufweist, und eine Innenseite des Ringabschnitts (1321) mit zwei gegenüberliegenden zweiten Aussparungen (1323) versehen ist, die dazu eingerichtet sind, in Presspassung mit der Achse (134) zu sein.

13. Omnidirektionales Kugelrad (100) nach Anspruch 12, wobei die Stopfbuchse (132) ferner einen Abdeckungsabschnitt (1322) umfasst und der Abdeckungsabschnitt (1322) mit einer Vielzahl von Gegenbohrungen (1324) versehen ist, die zur Befestigung einer Schraube ausgebildet sind; und wobei der Ringabschnitt (1321) mit einem Positionierungsstift (1325) versehen ist, der sich axial in Richtung des Kugelradskeletts (110) erstreckt.

14. Omnidirektionales Kugelrad (100) nach Anspruch 13, wobei der zylindrische Montageabschnitt (114) mit einem Schraubenpfosten (1142), der mit der Gegenbohrung (1324) im Abdeckungsabschnitt (1322) verwendet wird, und mit einem Positionierungspfosten (1143), der mit dem Positionierungsstift (1325) am Ringabschnitt (1321) verwendet wird, versehen ist.

15. Omnidirektionales Kugelrad (100) nach Anspruch 13, wobei der Ringabschnitt (1321) eine Größe hat, die dazu eingerichtet ist, um in der Durchgangsbohrung des ersten Rades (120) aufgenommen zu werden, und der Abdeckabschnitt (1322) mit einem Schlitz versehen ist, der dazu eingerichtet ist, um das Gummirad (131) aufzunehmen.

## Revendications

1. Roue à billes omnidirectionnelle (100) comprenant :
un squelette de roue à billes (110) ayant une surface externe incurvée, le squelette de roue à billes (110) pouvant pivoter et définissant un premier axe de pivot (101) ;
une première roue (120), la première roue (120) ayant une surface externe incurvée, étant raccordée de manière pivotante au squelette de roue à billes (110) et définissant un deuxième axe de pivot (102), une surface externe de la première roue (120) étant sur une même surface sphérique que la surface externe du squelette de roue à billes (110), et
un dessus de la surface externe de la première roue (120) étant prévu avec un trou débouchant pour recevoir une seconde roue (130), la seconde roue (130) étant raccordée, de manière pivotante, au squelette de roue à billes (110) et définissant un troisième axe de pivot (103), la surface externe de la première roue (120) et une partie d'une surface externe de la seconde roue (130) étant sur la même surface sphérique,
**caractérisée en ce que** :
il y a au moins trois premières roues (120), le deuxième axe de pivot (102) est perpendiculaire à et coupe le premier axe de pivot (101) ; et le troisième axe de pivot (103) est perpendiculaire au premier axe de pivot (101) et au deuxième axe de pivot (102) simultanément.

2. Roue à billes omnidirectionnelle (100) selon la revendication 1, dans laquelle le squelette de roue à billes (110) est prévu avec une cavité (115), le nombre de cavités (115) correspond au nombre de premières roues (120); et chaque cavité (115) est prévue avec une partie de montage cylindrique (114) dans cette dernière, un axe de la partie de montage cylindrique (114) est perpendiculaire à et coupe le premier axe de pivot (101) ; et la première roue (120) et la seconde roue (130) sont raccordées au squelette de roue à billes (110) par le biais de la partie de montage cylindrique (114).

3. Roue à billes omnidirectionnelle (100) selon la revendication 2, dans laquelle le squelette de roue à billes (110) comprend un boîtier (111), un montant central (112) et une plaque de séparation (113), et le boîtier (111), le montant central (112) et la plaque de séparation (113) sont formés de manière solidaire; le boîtier (111) est un boîtier sphérique ayant une ouverture; deux extrémités du montant central (112) sont formées sur le boîtier (111) et un axe du montant central (112) définit le premier axe de pivot (101); le nombre de plaques de séparation (113) correspond au nombre de cavités (115), chaque plaque de séparation (113) s'étend à partir d'une surface externe du montant central (112) jusqu'à une surface interne du boîtier (111) pour définir la cavité (115), et la partie de montage cylindrique (114) est formée en s'étendant hors de l'ouverture du boîtier (111) depuis deux plaques de séparation (113) adjacentes.

4. Roue à billes omnidirectionnelle (100) selon la revendication 3, dans laquelle la roue sphérique omnidirectionnelle (100) comprend en outre un arbre d'entraînement principal (140), et le montant central (112) du squelette de roue à billes (110) définit un trou d'arbre (1121) pour monter l'arbre d'entraînement principal (140).

5. Roue à billes omnidirectionnelle (100) selon la revendication 3 ou 4, dans laquelle deux extrémités du boîtier (111) du squelette de roue à billes (110) le long du premier axe de pivot (101) sont configurées comme des faces plates.

6. Roue à billes omnidirectionnelle (100) selon l'une quelconque des revendications 2 à 5, dans laquelle la première roue (120) comprend une couche de caoutchouc (121) et un premier squelette (122), la couche de caoutchouc (121) a une surface externe incurvée, et le premier squelette (122) est configuré pour supporter la couche de caoutchouc (121).

7. Roue à billes omnidirectionnelle (100) selon la revendication 6, dans laquelle le premier squelette (122) a une résistance à la compression supérieure à la résistance à la compression de la couche de caoutchouc (121).

8. Roue à billes omnidirectionnelle (100) selon la revendication 7, dans laquelle le premier squelette (122) a une forme de gradin.

9. Roue à billes omnidirectionnelle (100) selon l'une quelconque des revendications 6 à 8, dans laquelle la première roue (120) comprend en outre un premier palier (123) et une plaque de pression de palier (124), le premier squelette (122) définit une première rainure (1221), la plaque de pression de palier (124) définit une seconde rainure (1241) adaptée pour coopérer avec la première rainure (1221), la première rainure (1221) et la seconde rainure (1241) définissent collectivement un espace de logement pour loger le premier palier (123), et le premier palier (123) a un manchon de raccordement externe adapté pour être comprimé dans l'espace de logement, et un manchon de raccordement interne adapté pour être monté sur la partie de montage cylindrique (114).

10. Roue à billes omnidirectionnelle (100) selon l'une quelconque des revendications 2 à 9, dans laquelle une paroi périphérique externe de la partie de montage cylindrique (114) est prévue avec une pluralité de nervures (1141) s'étendant axialement.

11. Roue à billes omnidirectionnelle (100) selon l'une quelconque des revendications 2 à 10, dans laquelle la seconde roue (130) comprend une roue en caoutchouc (131) et un manchon de raccordement (132), la roue en caoutchouc (131) est en forme de broche et raccordée de manière pivotante au manchon de raccordement (132), et le manchon de raccordement (132) est raccordé, de manière fixe et directionnelle, à la partie de montage cylindrique (114).

12. Roue à billes omnidirectionnelle (100) selon la revendication 11, dans laquelle la seconde roue (130) comprend en outre deux seconds paliers (133) et un essieu (134), deux extrémités de la roue en caoutchouc (131) définissent un premier évidement (1311) séparément, le premier évidement (1311) est adapté pour être en raccordement avec serrage avec une bague externe du second palier (133), et une bague interne du second palier (133) est adaptée pour être en raccordement avec serrage avec l'essieu (134) ; le manchon de raccordement (132) a une partie annulaire (1321) et un côté interne de la partie annulaire (1321) est prévu avec deux seconds évidements (1323) opposés, adaptés pour être en raccordement avec serrage avec l'essieu (134).

13. Roue à billes omnidirectionnelle (100) selon la revendication 12, dans laquelle le manchon de raccordement (132) comprend en outre une partie de recouvrement (1322) et la partie de recouvrement (1322) est prévue avec une pluralité de contre-alésages (1324) configurés pour monter une vis; la partie annulaire (1321) est prévue avec une broche de positionnement (1325) s'étendant axialement vers le squelette de roue à billes (110).

14. Roue à billes omnidirectionnelle (100) selon la revendication 13, dans laquelle la partie de montage cylindrique (114) est prévue avec un montant de vis (1142) destiné à être utilisé avec le contre-alésage (1324) dans la partie de recouvrement (1322) et un montant de positionnement (1143) destiné à être utilisé avec la broche de positionnement (1325) sur la partie annulaire (1321).

15. Roue à billes omnidirectionnelle (100) selon la revendication 13, dans laquelle la partie annulaire (1321) a une taille adaptée pour être logée dans le trou débouchant de la première roue (120) et la partie de recouvrement (1322) est prévue avec une fente adaptée pour loger la roue en caoutchouc (131).
